# EUROPÄISCHE PATENTSCHRIFT

(11) **EP 4 303 943 B1**
(45) Veröffentlichungstag und Bekanntmachung des Hinweises auf die Patenterteilung: **06.08.2025**
(21) Anmeldenummer: 23177842.4
(22) Anmeldetag: 07.06.2023
(51) Int. Cl.: H01M 4/00, H01M 10/04, H01M 50/609, H01M 50/618, H01M 50/627, H01M 50/636, H01M 50/673

(54) **BEHÄLTER, SYSTEM, VERFAHREN UND VORRICHTUNG ZUM BEFÜLLEN EINER BATTERIEZELLE MIT ELEKTROLYT**
CONTAINER, SYSTEM, METHOD AND APPARATUS FOR FILLING AN ELECTROLYTE INTO A BATTERY CELL
RÉCIPIENT, SYSTÈME, PROCÉDÉ ET APPAREIL POUR REMPLIR UN ÉLECTROLYTE D'UN ÉLÉMENT DE BATTERIE

(30) Priorität: 13.06.2022 DE 102022114793
(43) Veröffentlichungstag der Anmeldung: 10.01.2024
(73) Patentinhaber: PowerCo SE, 38239 Salzgitter (DE)
(72) Erfinder: Witte, Erik, 38302 Wolfenbüttel (DE); Rathmann, Sven, 38108 Braunschweig (DE); Marschall, Maximilian, 37115 Duderstadt (DE); Böhm, Dennis, 38302 Wolfenbüttel (DE)
(74) Vertreter: FDST Patentanwälte

(56) Entgegenhaltungen:
- CN-A- 110 021 733
- US-A1- 2003 207 169
- US-A1- 2006 260 713
- US-A1- 2018 301 743

## Beschreibung

Die Erfindung betrifft einen Behälter zum Befüllen einer Batteriezelle mit Elektrolyt und ein System aufweisend den Behälter und eine mit Elektrolyt befüllbare Batteriezelle. Ferner betrifft die Erfindung ein Verfahren und eine Vorrichtung zum Befüllen einer Batteriezelle mit Elektrolyt unter Verwendung des Systems.

Die Grundeinheit einer wiederaufladbaren Batterie besteht aus einer galvanischen Zelle, die eine Reihe von Elektroden umfasst, die mittels eines Elektrolyt-Flüssigkeitsbads zum gegenseitigen Ionentransport befähigt werden. Je nach Bauart und Verwendungszweck besitzt eine wiederaufladbare Batterie mehrere solcher Zellen. Damit die wiederaufladbare Batterie möglichst gut funktioniert, ist es wichtig, dass die Batteriezellen, genauer gesagt deren Elektroden, vollständig mit Elektrolyt benetzt sind. Um dies bei der Befüllung der Batteriezellen mit Elektrolyt in ausreichender Qualität gewährleisten zu können, müssen lange Befüll- und Benetzungszeiten von zum Teil über 90 Minuten pro Batteriezelle hingenommen werden. Die Befüllung von Batteriezellen in industriellem Ausmaß ist daher kostenintensiv und bedarf einer hohen Maschinenzahl und eines großen Platzvorhalts. Es ist daher wünschenswert, die Befüllungszeiten von Batteriezellen mit Elektrolyt zu verringern.

Ein Ansatz zur Reduktion der Befüllungszeit ist das Ausnutzen eines Druckgefälles, damit Elektrolyt schneller in die Batteriezelle fließt. Ein Beispiel ist aus der US 2015/0364746 A1 bekannt. Dort beschrieben ist eine Vorrichtung und ein Verfahren zum Befüllen einer Batteriezelle über einen nach oben offenen Kolben. Der Kolben weist in der Bodenplatte eine Auslassöffnung zum Verbinden mit der Öffnung einer Batteriezelle auf. Mittels einer Vakuumpumpe wird die Batteriezelle über den darauf aufgesetzten Kolben ausgepumpt. Anschließend wird der Kolben mit Elektrolyt befüllt und der Druck außerhalb des Kolbens, sprich oberhalb des Elektrolytfüllstands in dem Kolben, durch Füllen des Vakuums erhöht. Das so entstehende Druckgefälle zwischen dem Nicht-Vakuum oberhalb des Elektrolyts und dem Vakuum unterhalb des Elektrolyts treibt das Elektrolyt in die Batteriezelle. Abhängig von einer Größe des Druckgefälles wird die Befüllzeit reduziert. Der Prozess kann weiter beschleunigt werden, indem nicht nur das Vakuum oberhalb des Elektrolytfüllstands gefüllt, sondern ein Druck über Atmosphärendruck hinaus angelegt wird, also ein noch größeres Druckgefälle zur Befüllung der Batteriezelle mit Elektrolyt verwendet wird. Weitere Beispiele sind aus den Druckschriften US 2003/207169 A1, US 2006/260713 A1 und US 2018/301743 A1 bekannt.

Problematisch an den bekannten Lösungen ist, dass die Befüllungszeit noch immer zu lang und die Herstellung einer Batteriezelle dadurch weiterhin kostenintensiv ist. Des Weiteren ist die Umsetzung der Befüllung der Batteriezelle aufwändig, da dies unter einer Trockenraumatmosphäre erfolgen muss, um eine unerwünschte Reaktion des Elektrolyts mit dem Wasser in der Umgebungsluft zu vermeiden.

Der Erfindung liegt nun die Aufgabe zugrunde, ein Verfahren und eine Vorrichtung zum Befüllen einer Batteriezelle mit Elektrolyt bereitzustellen, welche/s die Befüllung der Batteriezelle vereinfacht und die Befüllungszeit weiter reduziert.

Die erfindungsgemäße Aufgabe wird gelöst durch einen Behälter, ein System, ein Verfahren und eine Vorrichtung gemäß den unabhängigen Patentansprüchen. Bevorzugte Weiterbildungen sind Gegenstand der jeweils rückbezogenen Unteransprüche.

Ein erster Aspekt betrifft einen Behälter zum Befüllen einer Batteriezelle mit Elektrolyt. Der Behälter umfasst eine erste Einlassöffnung zum Einfüllen von Elektrolyt mit einem ersten Ventil zum Öffnen und zum Sperren der ersten Einlassöffnung, eine zweite Einlassöffnung zum Einfüllen von Inertgas mit einem zweiten Ventil zum Öffnen und zum Sperren der zweiten Einlassöffnung, und eine Auslassöffnung zum Auslassen von Elektrolyt mit einem dritten Ventil zum Öffnen und zum Sperren der Auslassöffnung. Ein Behälter ist erfindungsgemäß ein Gegenstand, der in seinem Inneren einen Hohlraum aufweist, der insbesondere dem Zweck dient, seinen Inhalt von seiner Umwelt zu trennen (Kompartimentierung). Das erste, das zweite und/oder das dritte Ventil sind bevorzugt elektromotorisch, elektromagnetisch, pneumatisch oder hydraulisch betätigbar. Der Behälter ist bevorzugt einstückig ausgestaltet. Ebenfalls bevorzugt weist der Behälter eine runde oder eckige Grundform, besonders bevorzugt eine zylindrische, elliptische, rechteckige oder quadratische Grundform, auf. Die Grundform wird bevorzugt durch eine Auslassseite, auf welcher die Auslassöffnung angeordnet ist, des Behälters bestimmt. Besonders bevorzugt stimmt die Grundform der Auslassseite mit einer Grundform einer Seite einer Batteriezelle überein, auf welcher eine Öffnung zum Befüllen der Batteriezelle angeordnet ist.

Aufgrund der mit Ventilen versehenen Öffnungen ist der Behälter gegenüber der Umgebungsluft, insbesondere gegenüber einer Nicht-Trockenatmosphäre abgedichtet. Dadurch wird in dem Behälter enthaltenes Elektrolyt vorteilhaft geschützt, ohne dass es der Bereitstellung der kostenaufwändigen Trockenraumatmosphäre bedarf. Ferner ist der Ort des Befüllens des abgedichteten Behälters mit Elektrolyt grundsätzlich frei wählbar. Daher kann der Befüllvorgang des Behälters mit Elektrolyt von dem Ort der Befüllstation entkoppelt und eine vorteilhafte Entlastung der Befüllstationen bewirkt werden. Beim eigentlichen Befüllvorgang der Batteriezelle kann der Behälter über die zweite Öffnung mit Druck beaufschlagt werden (durch Einleiten von Inertgas), um das Elektrolyt aus dem Behälter über die Auslassöffnung in die Batteriezelle zu drängen und die Befüllungszeit zu verringern. Ferner schützt der auf eine Batteriezelle aufgesetzte Behälter ebenfalls den Innenraum der Batteriezelle vor einer Nicht-Trockenraumatmosphäre. Mit anderen Worten kann der Behälter auf der Batteriezelle bis zum Verschlussvorgang der Batteriezelle verbleiben, um das Elektrolyt zu schützen. Somit kann der Verschlussvorgang der Batteriezelle ebenfalls von dem Ort der Befüllstation entkoppelt und eine weitere vorteilhafte Entlastung der Befüllstationen bewirkt werden.

Durch Erhöhung der Temperatur des Elektrolyts kann eine Viskositätssteigerung erzielt werden, die eine schnellere Verteilung des Elektrolyts in der Batteriezelle und insbesondere eine schnellere und bessere Benetzung der Batteriezelle ermöglicht. Daher folgt auf den Befüllungsschritt der bekannten Kolben häufig ein separater Erwärmungsschritt, dem sogenannten High-Temperature (HT)-Soaking, der ebenfalls unter Trockenraumatmosphäre durchgeführt werden muss. Der erfindungsgemäße Behälter hingegen ermöglicht zum einen, dass auf die Trockenraumatmosphäre verzichtet werden kann und zum anderen, dass das HT-Soaking und die Beaufschlagung des Behälters mit Druck durch die Inertgaszufuhr gleichzeitig durchgeführt werden können. Dadurch wird nicht nur die Befüllung der Batteriezellen vereinfacht, sondern vielmehr auch der Platzbedarf der Maschinen zur Befüllung der Batteriezellen erheblich reduziert.

Ferner ist vorgesehen, dass das erste Ventil und das dritte Ventil ein Stromventil oder ein Druckventil (Behinderung abhängig vom Druck) umfassen. Stromventile und Druckventile sind Ventile, welche einen Durchfluss in beide Richtungen selektiv öffnen oder sperren können. Beim Druckventil erfolgt das Öffnen oder Sperren des Durchflusses abhängig vom angelegten oder anliegenden Druck. Eine derartige Ventilausgestaltung ermöglicht es vorteilhaft, einen Unterdruck, vorzugsweise ein Vakuum, über die erste Einlassöffnung und die Auslassöffnung in der Batteriezelle anzulegen und diesen Unterdruck während des Befüllens der Batteriezelle mit Elektrolyt zum Einsaugen des Elektrolyts aus dem Behälter in die Batteriezelle zu nutzen. Dadurch wird die Befüllungszeit weiter verringert. Durch zeitgleiches Beaufschlagen des mit Elektrolyt befüllten Behälters mit Druck mittels Einleiten von Inertgas über die zweite Öffnung wird das Druckgefälle zwischen Behälterdruck und Batteriezellendruck weiter vergrößert, um die Befüllungszeit weiter zu verringern.

In weiterer bevorzugter Ausgestaltung ist vorgesehen, dass das zweite Ventil ein Rückschlagventil, insbesondere ein federgesperrtes Rückschlagventil, umfasst. Ein Rückschlagventil gestattet einen Durchfluss nur in eine Richtung. Bevorzugt ist das zweite Ventil derart als Rückschlagventil ausgestaltet, dass es einen Durchfluss in den Behälter zulässt, vorzugsweise ab einem Druck oberhalb von 2 bar, besonders bevorzugt oberhalb von 4 bar, insbesondere bevorzugt oberhalb von 5 bar, aber einen Abfluss aus dem Behälter durch die zweite Einlassöffnung verhindert. Ein derartig ausgestaltetes Rückschlagventil kann vorteilhaft mit einem Befüllungsdruck des Inertgases von bis zu 6 bar verwendet werden.

In weiterer bevorzugter Ausgestaltung ist vorgesehen, dass die erste Einlassöffnung und/oder die zweite Einlassöffnung auf einer Einlassseite und die Auslassöffnung auf einer Auslassseite des Behälters angeordnet ist, wobei die Auslassseite der Einlassseite gegenüberliegt. Diese Anordnung ermöglicht es, durch entsprechendes Aufsetzen des Behälters auf die Batteriezelle die Befüllungszeit unter Verwendung der Erdanziehungskraft zu reduzieren und gleichzeitig einen gut erreichbaren Zugang zum Einlassen von Elektrolyt und Inertgas in den Behälter zu gewährleisten, wenn eine Vielzahl von Behältern auf einer Vielzahl von eng nebeneinander angeordneten Batteriezellen - wie es bei wiederaufladbaren Batterien gewöhnlich der Fall ist - zum Befüllen der Batteriezellen aufgesetzt ist.

In weiterer bevorzugter Ausgestaltung ist vorgesehen, dass der Behälter ein Heizelement zum Einbringen von Wärmeenergie in den Behälter und/oder ein Wärmeübertragungselement zum Übertragen von Wärmeenergie in den Behälter umfasst. Hiermit kann das Elektrolyt in dem Behälter einer thermischen (Vor-)Behandlung unterzogen werden, um die Befüllungs- und Benetzungszeit weiter zu reduzieren. Der Ort der thermischen Behandlung des Elektrolyts ist mit dem hier vorgeschlagenen Behälter frei wählbar und von der eigentlichen Befüllstation entkoppelbar. Somit können die Befüllstationen weiter entlastet werden.

Das Wärmeübertragungselement umfasst bevorzugt eine Vielzahl von Heizrippen oder - lamellen zur Aufnahme von Umgebungswärme. Beispielsweise kann hierbei die Umgebungswärme während des HT-Soakings genutzt werden, um den Behälter zu erwärmen und einen konvektiven Wärmeübergang in den Behälter zu erzielen. Hierdurch kann die Erwärmung des Elektrolyts in dem Behälter beschleunigt werden, um eine geringere Befüllungs- und Benetzungszeit zu erzielen. Vorzugsweise sind die Heizrippen oder -lamellen auf einer Außenfläche des Behälters angeordnet. Hierdurch vergrößert sich die Oberfläche für einen konvektiven Wärmeübergang erheblich.

Zusätzlich oder alternativ umfasst das Heizelement bevorzugt eine Heizplatte zum Erwärmen des Behälters. Eine Heizplatte stellt im Gegensatz zu Heizrippen oder -lamellen eine Wärmequelle dar. Vorzugsweise ist die Heizplatte im direkten Kontakt zur Oberfläche des Behälters angeordnet. Dadurch wird die Wärme gezielt in unmittelbarer Nähe zu dem zu erwärmenden Elektrolyt erzeugt, wodurch eine ungewollte Erwärmung umliegender Objekte reduziert und Energie gespart werden kann. Außerdem kann das Elektrolyt unabhängig vom HT-Soaking thermisch (vor-)behandelt werden.

Ein weiterer Aspekt betrifft ein System zum Befüllen einer Batteriezelle mit Elektrolyt, welches einen Behälter mit den oben beschriebenen Merkmalen und eine mit Elektrolyt befüllbare Batteriezelle mit einer Öffnung, insbesondere einer Öffnung zum Einfüllen von Elektrolyt, umfasst. Die als optional beschriebenen Merkmale des obigen Behälters können analog auch für den Behälter des Systems herangezogen werden. Bevorzugt ist der Behälter mit der Auslassseite zu einer die Öffnung umfassenden Seite der Batteriezelle orientiert. Die Auslassseite des Behälter ist bevorzugt die Seite des Behälters, die die Auslassöffnung umfasst. Besonders bevorzugt ist der Behälter mit der Auslassseite auf der Seite der Öffnung der Batteriezelle angeordnet. Ebenfalls bevorzugt ist die Auslassöffnung derart auf der Auslassseite angeordnet, dass diese deckungsgleich mit der Öffnung der Batteriezelle ist. Mit anderen Worten sind die Auslassöffnung und die Öffnung der Batteriezelle bevorzugt direkt übereinander angeordnet, wenn der Behälter zum Befüllen der Batteriezelle mit Elektrolyt auf der Batteriezelle aufgesetzt ist. Dies hat den Vorteil, dass aus dem Behälter ausgelassenes Elektrolyt direkt in die Öffnung der Batteriezelle fließt.

Ferner kann ein Befüllstutzen und/oder ein Befüllschlauch zum Verbinden der Auslassöffnung mit der Öffnung der Batteriezelle vorgesehen sein. Mit dem Befüllstutzen oder -schlauch kann eine abgedichtete Verbindung der Auslassöffnung und der Öffnung der Batteriezelle sichergestellt werden und ein Gestaltungsspielraum der Anordnung von Auslassöffnung und Öffnung der Batteriezelle erhöht werden. Mit anderen Worten können auch unterschiedlich ausgestaltete Batteriezellen mit dem hier vorgeschlagenen Behälter gefüllt werden.

Ein Außenmaß der Auslassseite ist ebenfalls bevorzugt so ausgestaltet, dass es mit einem Außenmaß der die Öffnung umfassenden Seite der Batteriezelle einer mit Elektrolyt zu befüllenden Batteriezelle übereinstimmt. Mit anderen Worten bildet der Behälter bevorzugt eine Schattenfläche der Batteriezelle ab. Dies ermöglicht, dass Behälter und Batteriezelle einfach zusammengestapelt werden können. Das Aufsetzen des Behälters wird dadurch außerdem vereinfacht.

In einer bevorzugter Ausgestaltung steht der Behälter über der Auslassöffnung und der Öffnung der Batteriezelle in einer Fluidverbindung, besonders bevorzugt in einer abgedichteten Fluidverbindung, mit der Batteriezelle. Die Fluidverbindung kann beispielsweise unter Verwendung eines Befüllstutzens oder -schlauchs realisiert werden.

In weiterer bevorzugter Ausgestaltung umfasst das System ein Befestigungsmittel zum Befestigen des Behälters an der Batteriezelle. Das Befestigungsmittel ist bevorzugt eine Trägerstruktur zum Verspannen des Behälters und der Batteriezelle. Die Trägerstruktur umläuft bevorzugt den Behälter und die Batteriezelle. Die Trägerstruktur kann Aussparungen enthalten, um Material zu sparen. Die Trägerstruktur befestigt nicht nur vorteilhaft den Behälter und die Batteriezelle miteinander, sondern erhöht gleichzeitig die Widerstandsfähigkeit der Batteriezelle gegen ein Druckgefälle zwischen dem Innen- und dem Außenraum der Batteriezelle, wie es beispielsweise beim Anlegen eines Vakuums oder beim Einleiten des Inertgases in den Behälter auftritt. Mit anderen Worten stellt die Trägerstruktur eine Gegenkraft auf die Batteriezelle dar. Daher kann ein größeres Druckgefälle verwendet werden, um die Befüllungs- und Benetzungszeit weiter zu reduzieren, ohne dass die Batteriezelle beschädigt wird.

Ferner kann das System eine Vielzahl von Behältern mit den oben beschriebenen Merkmalen und eine Vielzahl von mit Elektrolyt befüllbaren Batteriezellen mit jeweils einer Öffnung umfassen. Bevorzugt entspricht die Vielzahl von Behältern der Vielzahl von Batteriezellen, damit jede Batteriezelle mit einem Behälter mit Elektrolyt befüllt, insbesondere gleichzeitig befüllt, werden kann. Vorteilhaft können damit eine Vielzahl von Batteriezellen mit Elektrolyt befüllt werden, ohne dass es einer Trockenraumatmosphäre bedarf.

Ein weiter Aspekt betrifft ein Verfahren zum Befüllen einer Batteriezelle mit Elektrolyt. Das Verfahren umfasst die Schritte:
- Bereitstellen eines Systems zum Befüllen einer Batteriezelle mit Elektrolyt mit den oben beschriebenen Merkmalen,
- Befüllen des Behälters mit Elektrolyt über die erste Einlassöffnung,
- Befüllen der Batteriezelle über die Auslassöffnung und die Öffnung der Batteriezelle und
- Einfüllen von Inertgas über die zweite Einlassöffnung zum Erhöhen eines Drucks innerhalb des Behälters.

In dem Verfahren wird der Behälter bevorzugt mit Elektrolyt gefüllt und im Anschluss auf die Batteriezelle aufgesetzt, um diese mit Elektrolyt zu befüllen. Alternativ kann der Behälter auf die Batteriezelle aufgesetzt werden und im Anschluss mit Elektrolyt befüllt werden. Die letztere Möglichkeit bietet den zusätzlichen Vorteil, dass ein Vakuum in der Batteriezelle auf einfache Weise über den Behälter, insbesondere über die erste Öffnung des Behälters, angelegt werden kann. Dies ist nicht möglich, wenn der Behälter bereits mit Elektrolyt gefüllt ist.

In einer bevorzugten Ausgestaltung umfasst das Verfahren den Schritt des Erwärmens des Behälters und des Elektrolyts. Mit anderen Worten erfolgt ein HT-Soaking des Systems zum Steigern der Viskosität des Elektrolyts. Dies hat den Vorteil, dass das Elektrolyt besser und schneller in die Batteriezelle fließt, und die Batteriezelle eine bessere Qualität aufweist. Außerdem wird die Befüllungs- und Benetzungszeit reduziert. Besonders bevorzugt erfolgt der Schritt des Erwärmens des Behälters und des Elektrolyts gleichzeitig mit dem Einfüllen von Inertgas. Hierdurch können zwei Prozessschritte vorteilhaft zu einem Prozessschritt kombiniert werden, sodass die Befüllungszeit der Batteriezelle weiter reduziert wird. Das Inertgas wird bevorzugt mit einem Druck von über 2 bar und/oder bis höchstens 10 bar, besonders bevorzugt mit einem Druck bis zu 6 bar in den Behälter eingeleitet.

In weiterer bevorzugter Ausgestaltung des Verfahrens erfolgt ein Schritt des Anbringens eines Befestigungsmittels, vorzugsweise einer Trägerstruktur, an das System bevor das Inertgas eingeführt wird. Hierdurch wird die Widerstandsfähigkeit der Batteriezelle gegen ein Druckgefälle zwischen dem Innen- und dem Außenraum der Batteriezelle erhöht und es kann ein größeres Druckgefälle verwendet werden, um das Elektrolyt in die Batteriezelle zu drängen. Hierdurch wird die Befüllungszeit der Batteriezelle weiter reduziert.

Ein weiter Aspekt betrifft eine Vorrichtung zum Befüllen einer Batteriezelle. Die Vorrichtung umfasst ein System zum Befüllen einer Batteriezelle mit Elektrolyt mit den oben beschriebenen Merkmalen, eine mit einer Elektrolytquelle verbundene erste Leitung zum Bereitstellen von Elektrolyt und eine mit einer Inertgasquelle verbundene zweite Leitung zum Bereitstellen von Inertgas. Die Inertgasquelle ist bevorzugt dazu eingerichtet, Inertgas mit einem Druck von mindestens 2 bar und/oder bis höchstens 10 bar, besonders bevorzugt mit einem Druck von bis zu 6 bar in den Behälter einzuleiten. Die erste und/oder zweite Leitung sind bevorzugt als Verrohrungen ausgestaltet. Die Verrohrungen können jeweils aus einem Rohr bestehen, welches in einer Vielzahl von Verbindungsstücken mündet, wie beispielsweise kapillarartige Endrohre oder -schläuche. Die einzelnen Verbindungsstücke der Vielzahl von Verbindungsstücken können dann genutzt werden, um mit einzelnen Behältern verbunden zu werden.

In einer bevorzugten Ausgestaltung umfasst die Vorrichtung eine Trägerstruktur zum Fixieren des Behälters und der Batteriezelle oder eine luftdichte Kammer, die mit einer Druckpumpe in Fluidverbindung steht. Die Trägerstruktur dient vorteilhaft zur Verstärkung der Widerstandsfähigkeit der Batteriezelle gegen ein Druckgefälle zwischen dem Innen- und dem Außenraum der Batteriezelle. Mit der Druckpumpe kann ein Kammerdruck der luftdichten Kammer erhöht werden, um das Druckgefälle zwischen dem Innen- und dem Außenraum der Batteriezelle zu reduzieren. Die luftdichte Kammer ist dabei so groß dimensioniert, dass die Befüllung der Batteriezelle oder eine Vielzahl von Batteriezellen in der Kammer stattfinden kann. Insbesondere ist die Druckpumpe eingerichtet, den Druck in der luftdichten Kammer in gleicher Höhe mit dem eingeleiteten Inertgasdruck einzustellen. Folglich kann ein größerer Inertgasdruck verwendet werden, um das Elektrolyt in die Batteriezelle zu drängen. Hierdurch wird die Befüllungszeit der Batteriezelle weiter reduziert.

In weiterer bevorzugter Ausgestaltung umfasst die Vorrichtung eine Vakuumpumpe. Die Vakuumpumpe wird bevorzugt über die jeweilige erste Öffnung der Behälter angeschlossen, um ein Vakuum in der Batteriezelle anlegen zu können. Das Vakuum kann zum Erzeugen eines Druckgefälles genutzt werden.

In weiterer bevorzugter Ausgestaltung umfasst die Vorrichtung ein Heizelement oder einen abgedichteten Ofen, welcher groß genug dimensioniert ist, dass die Befüllung der Batteriezelle oder einer Vielzahl von Batteriezellen möglich ist. Mit dem Heizelement oder dem Ofen kann ein HT-Soaking durchgeführt werden, um die Befüllungs- und Benetzungszeit weiter zu reduzieren.

Weitere bevorzugte Ausgestaltungen ergeben sich aus den übrigen, in den Unteransprüchen genannten Merkmalen.

Die verschiedenen, in dieser Anmeldung genannten Ausführungsformen sind, sofern im Einzelfall nicht anders ausgeführt, mit Vorteil miteinander kombinierbar.

Die Erfindung wird nachfolgend in Ausführungsbeispielen anhand der zugehörigen Zeichnungen erläutert. Es zeigen:
- Figur 1: eine schematische Darstellung eines erfindungsgemäßen Behälters gemäß einer Ausführungsform;
- Figur 2: eine schematische Darstellung eines erfindungsgemäßen Systems gemäß einer Ausführungsform;
- Figur 3: eine schematische Darstellung eines erfindungsgemäßen Verfahrens gemäß einer Durchführungsform; und
- Figur 4: eine schematische Darstellung einer erfindungsgemäßen Vorrichtung gemäß einer Ausführungsform.

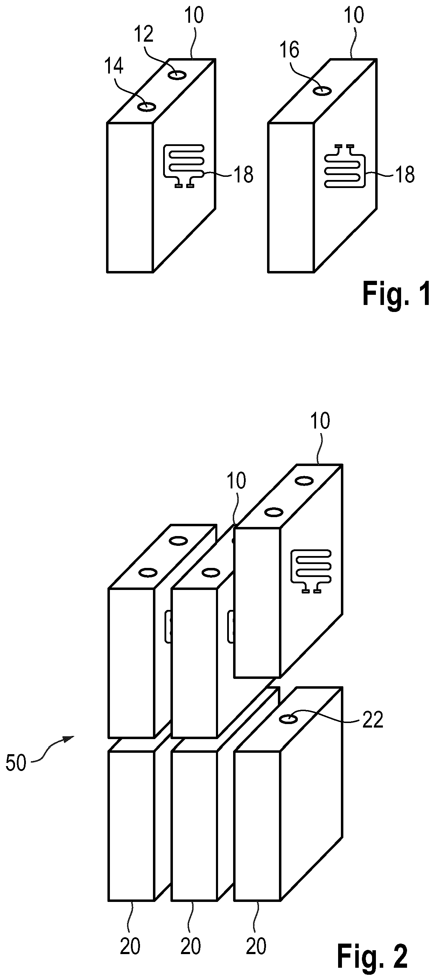

Figur 1 zeigt eine schematische Darstellung eines erfindungsgemäßen Behälters 10 gemäß einer Ausführungsform. Der Behälter 10 ist zum Befüllen einer Batteriezelle 20 mit Elektrolyt geeignet.

In Figur 1 ist der Behälter 10 links in einer perspektivischen Draufsicht von oben und rechts in einer perspektivischen Draufsicht von unten, sprich in einer umgedrehten Position, dargestellt. Der Behälter 10 umfasst auf einer Einlassseite (oben) eine erste Einlassöffnung 12 zum Einfüllen von Elektrolyt und eine zweite Einlassöffnung 14 zum Einfüllen von Inertgas und auf einer Auslassseite (unten) eine Auslassöffnung 16 zum Auslassen von Elektrolyt. Die Öffnungen 12, 14, 16 bilden jeweils einen Zugang zu einem inneren, mit Elektrolyt befüllbaren Hohlraum des Behälters 10. Der Behälter 10 ist vorzugsweise ein Becher. Der Behälter 10 besitzt eine rechteckige Grundform.

Zur selektiven Abdichtung des inneren Hohlraums gegenüber der Umgebung umfasst jede der drei Öffnungen 12, 14, 16 jeweils ein Ventil (nicht dargestellt) zum Öffnen und zum Sperren der entsprechenden Öffnung 12, 14, 16. Sind alle Ventile gesperrt, ist der Behälter 10 gegenüber einer Nicht-Trockenatmosphäre abgedichtet und in dem Behälter 10 enthaltenes Elektrolyt, insbesondere über die erste Öffnung 12 eingefülltes Elektrolyt, vorteilhaft geschützt, ohne dass es der Bereitstellung einer kostenaufwändigen Trockenraumatmosphäre bedarf. Durch Einleiten von Inertgas über die zweite Öffnung 14 und entsprechendem Öffnen des zweiten Ventils kann der innere Hohlraum mit Druck beaufschlagt werden, um das Elektrolyt zur Befüllung einer Batteriezelle 20 aus dem Behälter 10 über die Auslassöffnung 16 in die Batteriezelle 20 zu treiben. Das Beaufschlagen des Behälters 10 mit Druck über die Inertgaszufuhr erzeugt ein Druckgefälle zwischen dem inneren Hohlraum des Behälters 10 und einem inneren Hohlraum der Batteriezelle 20, welches dem Zweck dient, die Befüllungszeit zu verringern.

Das erste Ventil und das dritte Ventil sind als elektromagnetisch betätigbare Stromventile ausgestaltet, um ein Auspumpen der Batteriezelle 20 vor der Befüllung mit Elektrolyt -wie später beschrieben wird - zu ermöglichen. Das zweite Ventil ist ein federgesperrtes Rückschlagventil, um einen Austritt des zugeführten Inertgases aus dem Behälter 10 zu verhindern.

Der Behälter 10 weist ferner ein Heizelement 18 zum Erwärmen des Behälters 10 in Gestalt einer Heizplatte auf. Die Heizplatte ist im direkten Kontakt zur Oberfläche des Behälters 10 angeordnet. Dadurch kann der Behälter 10 direkt erwärmt werden, um darin befindliches Elektrolyt zu erwärmen. Mit anderen Worten kann das Elektrolyt vor dem eigentlichen Befüllen der Batteriezelle 20 thermisch vorbehandelt werden, um eine Viskositätssteigerung zu erzielen. Dadurch wird eine schnellere Verteilung des Elektrolyts in der Batteriezelle 20 und eine schnellere und bessere Benetzung der Batteriezelle 20 ermöglicht. Wie später näher erläutert, ermöglicht der Behälter 10 eine Erwärmung des Elektrolyts (HT-Soaking) und eine Beaufschlagung des Behälters 10 mit Druck mittels Inertgaszufuhr gleichzeitig. Dies vereinfacht die Befüllung der Batteriezellen 20 und reduziert den Platzbedarf der Maschinen zur Befüllung der Batteriezellen 20.

Figur 2 zeigt eine schematische Darstellung eines erfindungsgemäßen Systems 50 gemäß einer Ausführungsform. Das System 50 umfasst eine Vielzahl von den in Figur 1 dargestellten Behältern 10 und eine Vielzahl von mit Elektrolyt befüllbaren Batteriezellen 20 mit jeweils einer Öffnung 22. Die Behälter 10 sind jeweils mit der Auslassseite auf eine die Öffnung 22 enthaltende Seite einer Batteriezelle 20 aufgesetzt. Die Grundform der Behälter 10 stimmt jeweils mit einer Grundform der Batteriezellen 20 überein. Mit anderen Worten sind die Außenmaße der Behälter 10 auf die Grundform der Batteriezellen 20 angepasst, um ein leichtes Aufsetzen der Behälter 10 auf die Batteriezellen 20 zu ermöglichen. Die Auslassöffnung 16 der jeweiligen Behälter 10 befindet sich direkt über der Öffnung 22 der jeweiligen Batteriezellen 20. Die Auslassöffnungen 16 sind jeweils in abgedichteter Fluidverbindung mit der jeweiligen Öffnung 22, um ein Auspumpen oder eine Befüllung der Batteriezelle 20 mit Elektrolyt zu ermöglichen.

Wie in Figur 2 ersichtlich, dichten die auf die Batteriezellen 20 aufgesetzten Behälter 10 den inneren Hohlraum der jeweiligen Batteriezellen 20 vor einer Nicht-Trockenraumatmosphäre ab.

Eine Trockenraumatmosphäre zum Befüllen der Batteriezellen 20 mit Elektrolyt ist nicht erforderlich.

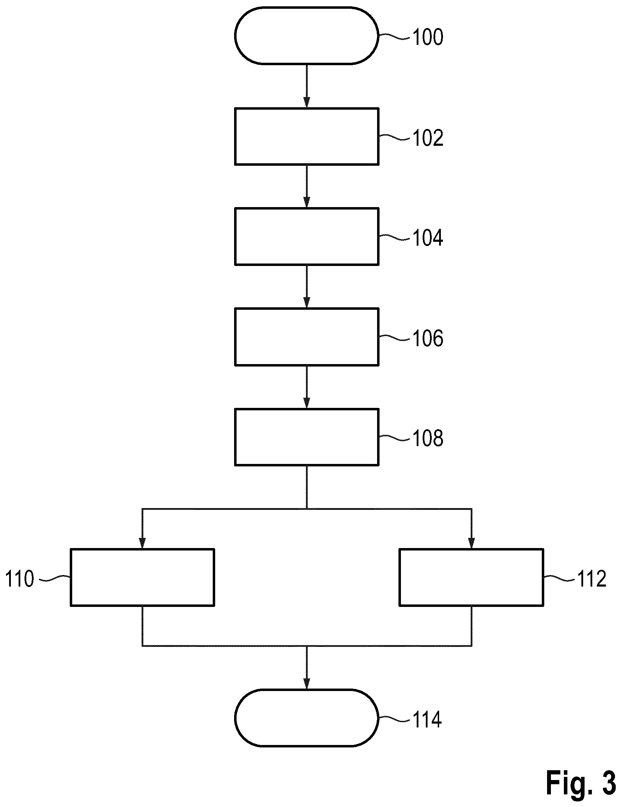

Figur 3 zeigt eine schematische Darstellung eines erfindungsgemäßen Verfahrens gemäß einer Durchführungsform.

In einem ersten Verfahrensschritt 100 wird das System 50 aus Figur 2 bereitgestellt.

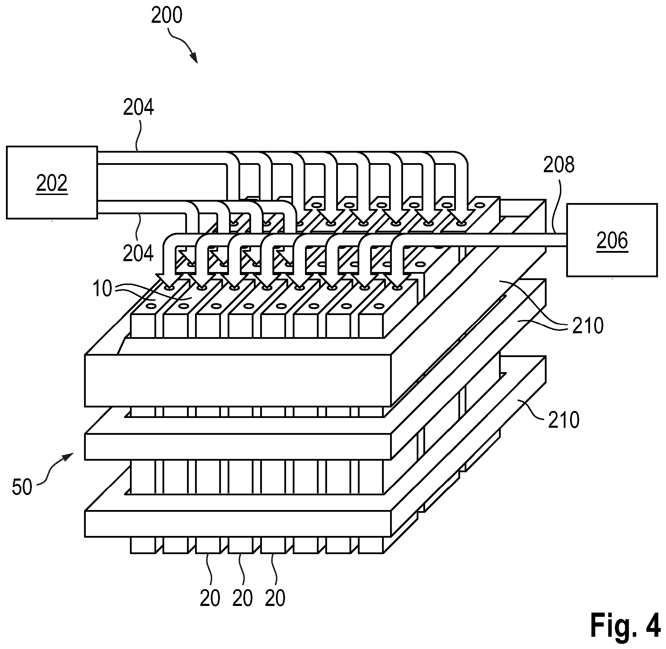

In einem zweiten Verfahrensschritt 102 wird eine Trägerstruktur 210 zum Verspannen der Behälter 10 und der Batteriezellen 20 (siehe Figur 4) an dem System 50 angebracht. Die Trägerstruktur 210 bildet einen das System 50 umlaufenden stabilen Rahmen, der umlaufende Aussparungen umfasst. Mit der Trägerstruktur 210 wird die Widerstandsfähigkeit der Batteriezellen 20 gegen ein Druckgefälle zwischen dem inneren Hohlraum und der Umgebung der Batteriezellen 20, wie es beispielsweise beim Anlegen eines Vakuums oder beim Einleiten des Inertgases in die Behälter 10 auftritt, erhöht. Da die Batteriezellen 20 dadurch einem größeren Druckgefälle standhalten können, kann die Befüllungs- und Benetzungszeit durch größere Druckgefälle weiter reduziert werden, ohne dass die Batteriezellen 20 beschädigt werden. Insbesondere die Aussparungen der Trägerstruktur 210 auf Höhe der Batteriezellen 20 können nach Bedarf auch weggelassen werden, um die Widerstandsfähigkeit der Batteriezellen 20 weiter zu erhöhen.

In einem dritten Verfahrensschritt 104 werden die Batteriezellen 20 ausgepumpt, um einen Unterdruck, vorzugsweise ein Vakuum, in der Batteriezelle 20 zu erhalten. Das Auspumpen der Batteriezellen 20 erfolgt über eine Druckpumpe, vorzugsweise eine Vakuumpumpe, die über die erste Öffnung 10 der Behälter 10 angeschlossen wird und dadurch in abgedichteter Fluidverbindung mit den Batteriezellen 20 steht. Nach Erreichen des gewünschten Unterdrucks, bevorzugt eines Vakuums, in den Batteriezellen 20 kann das dritte Ventil in der Auslassöffnung 16 der Behälter 10 gesperrt werden und die Vakuumpumpe von den Behältern 10 getrennt werden.

In einem vierten Verfahrensschritt 106 wird Elektrolyt über die erste Öffnung 10 der Behälter 10 in den inneren Hohlraum der Behälter 10 eingefüllt. Nach erfolgter Befüllung der Behälter 10 mit Elektrolyt wird das erste Ventil in der ersten Öffnung 10 der Behälter 10 gesperrt, um den inneren Hohlraum der Behälter 10 abzudichten.

In einem fünften Verfahrensschritt 108 werden die Batteriezellen 20 mit Elektrolyt aus den Behältern 10 befüllt. Hierzu wird das dritte Ventil der Auslassöffnung 16 der Behälter 10 geöffnet. Der in den Batteriezellen 20 herrschende Unterdruck (Vakuum) saugt das Elektrolyt in die Batteriezellen 20 an oder ein.

Um das Elektrolyt schneller in die Batteriezellen 20 zu füllen und ein schnelleres und besseres Benetzen der Batteriezellen 20 zu ermöglichen, erfolgen ein sechster 110 und ein siebter 112 Verfahrensschritt gleichzeitig.

In dem sechsten Verfahrensschritt 110 wird die Temperatur des Elektrolyts erhöht, indem die Heizelemente 18 der einzelnen Behälter 10 aktiviert werden und Wärme an die Behälter 10 abgeben. Die Wärme der Behälter 10 wird auf das in den Behältern 10 befindliche Elektrolyt weitergegeben.

Gleichzeitig wird Inertgas, beispielsweise Stickstoff, über die zweite Öffnung 14 in die Behälter 10 eingeleitet, um den Druck in dem inneren Hohlraum der Behälter 10 zu erhöhen (siebter Verfahrensschritt 112). Das Einleiten des Inertgases erfolgt bevorzugt pulsartig. Mit anderen Worten werden bevorzugt Druckpulse erzeugt, die einen positiven Einfluss auf die Benetzungsqualität der Batteriezelle haben.

In einem achten Verfahrensschritt 114 wird die mit Elektrolyt befüllte Batteriezelle 20 versiegelt. Durch die Abdichtung der mit Elektrolyt befüllten Batteriezellen 20 durch die Behälter 10 kann die Versiegelung an einem beliebigen Ort erfolgen. Der Behälter 10 kann von der versiegelten Batteriezelle 20 abgenommen, gereinigt und für das Verfahren wiederverwendet werden.

Figur 4 zeigt eine schematische Darstellung einer erfindungsgemäßen Vorrichtung 200 zum Befüllen einer Vielzahl von Batteriezellen 20 mit Elektrolyt gemäß einer Ausführungsform. Die Vorrichtung 200 umfasst das System 50 aus Figur 2, wobei die Behälter 10 und die Batteriezellen 20 durch die zuvor beschriebene Trägerstruktur 210 zusammengehalten werden. Die Vorrichtung 200 umfasst außerdem eine mit einer Elektrolytquelle 202 verbundene erste Leitung 204 zum Bereitstellen von Elektrolyt und eine mit einer Inertgasquelle 206 verbundene zweite Leitung 208 zum Bereitstellen von Inertgas.

Wie in Figur 4 ersichtlich, münden die erste 204 und die zweite 208 Leitung in kapillarartigen Endungen, die jeweils mit den ersten 12 respektive den zweiten 14 Öffnungen der Behälter 10 verbindbar sind, um eine abgedichtete Fluidverbindung der Elektrolytquelle 202 mit den ersten Öffnungen 12 der Behälter 10 und eine abgedichtete Fluidverbindung der Inertgasquelle 206 mit den zweiten Öffnungen 14 der Behälter 10 zu bilden. Die in Figur 4 mit Pfeilen dargestellte erste 204 und zweite 208 Leitung ist lediglich exemplarischer Natur und nicht auf die konkrete Anzahl von dargestellten Pfeilen erschöpft.

### Bezugszeichenliste

- 10: Behälter
- 12: erste Einlassöffnung
- 14: zweite Einlassöffnung
- 16: Auslassöffnung
- 18: Heizelement
- 20: Batteriezelle
- 22: Öffnung
- 50: System
- 100: erster Verfahrensschritt
- 102: zweiter Verfahrensschritt
- 104: dritter Verfahrensschritt
- 106: vierter Verfahrensschritt
- 108: fünfter Verfahrensschritt
- 110: sechster Verfahrensschritt
- 112: siebter Verfahrensschritt
- 114: achter Verfahrensschritt
- 200: Vorrichtung
- 202: Elektrolytquelle
- 204: erste Leitung
- 206: Inertgasquelle
- 208: zweite Leitung
- 210: Trägerstruktur

## Patentansprüche

1. Behälter (10) zum Befüllen einer Batteriezelle (20) mit Elektrolyt, aufweisend:
- eine erste Einlassöffnung (12) zum Einfüllen von Elektrolyt mit einem ersten Ventil zum Öffnen und zum Sperren der ersten Einlassöffnung (12),
- eine zweite Einlassöffnung (14) zum Einfüllen von Inertgas mit einem zweiten Ventil zum Öffnen und zum Sperren der zweiten Einlassöffnung (14), und
- eine Auslassöffnung (16) zum Auslassen von Elektrolyt mit einem dritten Ventil zum Öffnen und zum Sperren der Auslassöffnung (16),
wobei das erste Ventil und das dritte Ventil ein Stromventil oder ein Druckventil umfassen, die jeweils dazu eingerichtet sind, einen Durchfluss in beide Richtungen selektiv zu öffnen oder zu sperren.

2. Behälter(10) nach Anspruch 1, **dadurch gekennzeichnet, dass** das zweite Ventil ein Rückschlagventil umfasst.

3. Behälter (10) nach einem der vorangehenden Ansprüche, **dadurch gekennzeichnet, dass** die erste Einlassöffnung (12) und/oder die zweite Einlassöffnung (14) auf einer Einlassseite und die Auslassöffnung (16) auf einer Auslassseite des Behälters (10) angeordnet ist, wobei die Auslassseite der Einlassseite gegenüberliegt.

4. Behälter (10) nach einem der vorangehenden Ansprüche, **gekennzeichnet durch** ein Heizelement (18) zum Einbringen von Wärmeenergie in den Behälter (10) und/oder ein Wärmeübertragungselement zum Übertragen von Wärmeenergie in den Behälter (10).

5. System (50) zum Befüllen einer Batteriezelle (20) mit Elektrolyt, aufweisend:
einen Behälter (10) nach einem der vorangehenden Ansprüche, und
eine mit Elektrolyt befüllbare Batteriezelle (20) mit einer Öffnung (22).

6. System (50) nach Anspruch 5, **dadurch gekennzeichnet, dass** der Behälter (10) über die Auslassöffnung (16) und die Öffnung (22) der Batteriezelle (20) in einer Fluidverbindung mit der Batteriezelle (20) steht.

7. System (50) nach Anspruch 5 oder 6, **gekennzeichnet durch** ein Befestigungsmittel zum Befestigen des Behälters (10) an der Batteriezelle (20).

8. Verfahren zum Befüllen einer Batteriezelle (20) mit Elektrolyt, aufweisend die Schritte:
- Anlegen eines Unterdrucks in der Batteriezelle (20) über die erste Einlassöffnung (12) und die Auslassöffnung (16),
- Bereitstellen eines Systems (50) nach einem der Ansprüche 5 bis 7,
- Befüllen des Behälters (10) mit Elektrolyt über die erste Einlassöffnung (12),
- Befüllen der Batteriezelle (20) über die Auslassöffnung (16) und die Öffnung (22) der Batteriezelle (20) und
- Einfüllen von Inertgas über die zweite Einlassöffnung (14) zum Erhöhen eines Drucks innerhalb des Behälters (10).

9. Vorrichtung (200) zum Befüllen einer Batteriezelle (20) mit Elektrolyt, aufweisend:
- ein System (50) nach einem der Ansprüche 5 bis 7,
- eine mit einer Elektrolytquelle (202) verbundene erste Leitung (204) zum Bereitstellen von Elektrolyt und
- eine mit einer Inertgasquelle (206) verbundene zweite Leitung (208) zum Bereitstellen von Inertgas.

## Claims

1. Container (10) for filling a battery cell (20) with electrolyte, having:
- a first inlet opening (12) for filling with an electrolyte, with a first valve for opening and closing the first inlet opening (12),
- a second inlet opening (14) for filling with an inert gas, with a second valve for opening and closing the second inlet opening (14), and
- an outlet opening (16) for letting electrolyte out, with a third valve for opening and closing the outlet opening (16),
wherein the first valve and the third valve comprise a flow valve or a pressure valve, which are in each case designed for selectively opening or closing a throughflow in both directions.

2. Container (10) according to Claim 1, **characterized in that** the second valve comprises a nonreturn valve.

3. Container (10) according to one of the preceding claims, **characterized in that** the first inlet opening (12) and/or the second inlet opening (14) is/are arranged on an inlet side and the outlet opening (16) is arranged on an outlet side of the container (10), wherein the outlet side is opposite from the inlet side.

4. Container (10) according to one of the preceding claims, **characterized by** a heating element (18) for introducing thermal energy into the container (10) and/or a transfer element for transferring thermal energy into the container (10).

5. System (50) for filling a battery cell (20) with electrolyte, having:
a container (10) according to one of the preceding claims, and
a battery cell (20) which can be filled with electrolyte and has an opening (22).

6. System (50) according to Claim 5, **characterized in that** the container (10) is in fluid connection with the battery cell (20) by way of the outlet opening (16) and the opening (22) of the battery cell (20).

7. System (50) according to Claim 5 or 6, **characterized by** a fastening means for fastening the container (10) to the battery cell (20).

8. Method for filling the battery cell (20) with electrolyte, having the following steps:
- creating a negative pressure in the battery cell (20) by way of the first inlet opening (12) and the outlet opening (16),
- providing a system (50) according to one of Claims 5 to 7,
- filling the container (10) with electrolyte by way of the first inlet opening (12),
- filling the battery cell (20) by way of the outlet opening (16) and the opening (22) of the battery cell (20) and
- filling with inert gas by way of the second inlet opening (14) for increasing a pressure inside the container (10).

9. Apparatus (200) for filling a battery cell (20) with electrolyte, having:
- a system (50) according to one of Claims 5 to 7,
- a first line (204), connected to an electrolyte source (202), for providing electrolyte and
- a second line (208), connected to an inert gas source (206), for providing inert gas.

## Revendications

1. Récipient (10) destiné à remplir un élément de batterie (20) avec un électrolyte, comportant :
- un premier orifice d'entrée (12) destiné à transvaser un électrolyte avec une première vanne pour ouvrir et fermer le premier orifice d'entrée (12),
- un deuxième orifice d'entrée (14) destiné à transvaser du gaz inerte avec une deuxième vanne pour ouvrir et fermer le deuxième orifice d'entrée (14), et
- un orifice de sortie (16) destiné à faire sortir un électrolyte avec une troisième vanne pour ouvrir et fermer l'orifice de sortie (16),
la première vanne et la troisième vanne comprenant une vanne de régulation de débit ou une vanne de régulation de pression, qui sont respectivement mises au point pour permettre ou bloquer au choix un flux traversant dans les deux directions.

2. Récipient (10) selon la revendication 1, **caractérisé en ce que** la deuxième vanne comprend un clapet anti-retour.

3. Récipient (10) selon l'une quelconque des revendications précédentes, **caractérisé en ce que** le premier orifice d'entrée (12) et/ou le deuxième orifice d'entrée (14) sont disposés sur un côté d'entrée et l'orifice de sortie (16) est disposé sur un côté de sortie du récipient (10), le côté de sortie faisant face au côté d'entrée.

4. Récipient (10) selon l'une quelconque des revendications précédentes, **caractérisé par** un élément chauffant (18) destiné à introduire de l'énergie thermique dans le contenant (10) et/ou un élément de transfert de chaleur destiné à transférer de l'énergie thermique dans le récipient (10).

5. Système (50) de remplissage d'un élément de batterie (20) avec un électrolyte, comportant :
un récipient (10) selon l'une quelconque des revendications précédentes, et
un élément de batterie (20) pouvant être rempli d'un électrolyte avec un orifice (22).

6. Système (50) selon la revendication 5, **caractérisé en ce que** le récipient (10) est en communication fluidique avec l'élément de batterie (20) par l'orifice de sortie (16) et l'orifice (22) de l'élément de batterie (20).

7. Système (50) selon la revendication 5 ou 6, **caractérisé par** un moyen de fixation destiné à fixer le récipient (10) sur l'élément de batterie (20).

8. Procédé de remplissage d'un élément de batterie (20) avec un électrolyte, présentant les étapes :
- d'application d'une dépression dans l'élément de batterie (20) par le premier orifice d'entrée (12) et l'orifice de sortie (16),
- de fourniture d'un système (50) selon l'une quelconque des revendications 5 à 7,
- de remplissage du récipient (10) avec un électrolyte par le premier orifice d'entrée (12),
- de remplissage de l'élément de batterie (20) par l'orifice de sortie (16) et l'orifice (22) de l'élément de batterie (20), et
- de transvasement de gaz inerte par le deuxième orifice d'entrée (14) pour augmenter une pression à l'intérieur du récipient (10).

9. Dispositif (200) de remplissage d'un élément de batterie (20) avec un électrolyte, comportant :
- un système (50) selon l'une quelconque des revendications 5 à 7,
- un premier conduit (204) raccordé à une source d'électrolyte (202) pour fournir l'électrolyte, et
- un deuxième conduit (208) raccordé à une source de gaz inerte (206) pour fournir du gaz inerte.
